(19) Europäisches Patentamt / European Patent Office / Office européen des brevets

(11) **EP 2 655 838 B1**

(12) **FASCICULE DE BREVET EUROPEEN**

(45) Date de publication et mention de la délivrance du brevet:
**11.02.2015 Bulletin 2015/07**

(51) Int Cl.:
*F02D 41/00* *(2006.01)*     *F02D 35/00* *(2006.01)*
*F02D 41/14* *(2006.01)*

(21) Numéro de dépôt: **11815457.4**

(22) Date de dépôt: **20.12.2011**

(86) Numéro de dépôt international:
**PCT/FR2011/053079**

(87) Numéro de publication internationale:
**WO 2012/085443 (28.06.2012 Gazette 2012/26)**

(54) **SYSTEME ET PROCEDE DE COMMANDE D'UN MOTEUR A COMBUSTION INTERNE POUR VEHICULE AUTOMOBILE EN FONCTIONNEMENT TRANSITOIRE**

SYSTEM UND VERFAHREN ZUR STEUERUNG EINES VERBRENNUNGSMOTORS FÜR EIN KRAFTFAHRZEUG AUF DEM TRANSPORTWEG

SYSTEM AND METHOD FOR CONTROLLING AN INTERNAL COMBUSTION ENGINE FOR A MOTOR VEHICLE IN TRANSIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061071**

(43) Date de publication de la demande:
**30.10.2013 Bulletin 2013/44**

(73) Titulaire: **Renault S.A.S.**
**92100 Boulogne-Billancourt (FR)**

(72) Inventeurs:
• **FONTVIEILLE, Laurent**
  **F-91190 Gif-sur-Yvette (FR)**
• **PETILLON, Yohann**
  **F-78180 Montigny le Bretonneux (FR)**
• **MOULIN, Philippe**
  **F-75009 Paris (FR)**
• **GRONDIN, Olivier**
  **F-78380 Bougival (FR)**

(56) Documents cités:
FR-A1- 2 866 392     FR-A1- 2 919 024
US-A1- 2006 248 878

**Description**

L'invention concerne le domaine du contrôle des moteurs à combustion interne avec recirculation partielle des gaz d'échappement à contrôle séquentiel, et plus particulièrement le contrôle de tels moteurs lors d'un régime transitoire.

Les moteurs à combustion interne sont commandés par des systèmes de commande mis au point en usine. Les systèmes sont mis au point en balayant plusieurs valeurs discrètes de grandeurs de contrôle. Les mises au point sont ainsi réalisées en régime stabilisé, c'est-à-dire dans une phase de fonctionnement dans laquelle les paramètres de commande ne varient pas.

Cependant, lors du déplacement du véhicule, le moteur à combustion interne passe par une succession de phases de fonctionnement stabilisé séparées par des phases de fonctionnement transitoire.

Lors des phases de fonctionnement transitoire d'un moteur à combustion interne, le moteur à combustion interne ne fonctionne pas dans des conditions similaires à celles de la calibration. Si le système n'a pas le temps de s'adapter aux nouvelles conditions de fonctionnement, les différents procédés de régulation ne sont pas efficaces. Cela est particulièrement le cas lors des changements de rapport de boite de vitesses ou lors de décélérations suivies d'une réaccélération.

Pour pouvoir réguler le fonctionnement du moteur à combustion interne lors de ces phases, il est nécessaire d'accélérer le temps de réponse du système.

Selon un mode de réalisation de l'invention, on propose un système de commande d'un moteur à combustion interne du type diesel équipé d'un circuit de recirculation partielle des gaz d'échappement, comprenant un moyen d'estimation de consignes de paramètres d'air admis. Le système de commande comprend un moyen d'estimation de la richesse d'échappement, un moyen de détermination d'une consigne de la richesse d'admission en fonction de consignes de paramètres d'air admis, et un moyen de correction de l'une au moins des consignes de paramètres d'air admis en fonction de l'estimation de la richesse d'échappement et de la consigne de la richesse d'admission.

Le système de commande présente l'avantage de s'intégrer facilement dans la structure de régulation de l'air admis d'un véhicule, d'utiliser les capteurs généralement présents sur un véhicule et de pouvoir s'adapter à tous les types de circuits de recirculation partielle des gaz d'échappement. Le système de commande présente également l'avantage de réguler les phases de fonctionnement transitoire d'un moteur à combustion interne afin d'accélérer le temps de réponse du système ce qui a pour effet de réduire les émissions d'espèces polluantes.

Le moyen de détermination d'une consigne de la richesse d'admission peut comprendre une cartographie du rendement volumique et des moyens de mémorisation contenant la valeur de la richesse à la stoechiométrie, la constante des gaz et la cylindrée du moteur à combustion interne.

Le système de commande peut comprendre un moyen de mesure de la température du collecteur d'admission, un moyen de mesure de la vitesse de rotation du moteur, et un moyen d'estimation de la richesse à l'échappement. Le moyen de correction de l'une au moins des consignes de paramètres d'air admis peut être apte à déterminer une consigne corrigée de l'une au moins des consignes de paramètres d'air admis en fonction de l'estimation de richesse d'échappement, de la consigne de la richesse d'admission, de la température du collecteur d'admission, de la vitesse de rotation du moteur, et de la richesse à l'échappement.

Le moyen d'estimation de la richesse à l'échappement peut être un capteur de mesure.

La consigne corrigée de débit d'air admis peut correspondre à la consigne de débit d'air admis si le moteur à combustion interne présente un fonctionnement stabilisé.

Le circuit de recirculation partielle des gaz d'échappement peut être piqué :

- entre le moteur et le turbocompresseur, ou
- entre d'une part le turbocompresseur et l'admission d'air frais et d'autre part le turbocompresseur et l'échappement, ou
- une combinaison de ces deux circuits.

Le moyen d'estimation des consignes de paramètres d'air admis peut être une cartographie.

Les paramètres d'air admis peuvent comprendre la pression d'air admis et le débit d'air admis.

Selon un autre mode de réalisation, on propose un procédé de commande d'un moteur à combustion interne équipant un véhicule automobile, muni d'un circuit de recirculation partielle des gaz d'échappement, le procédé de commande comprenant une estimation de consignes de paramètres d'air admis. Le procédé de commande comprend en outre les étapes suivantes :

on estime la richesse d'échappement,
on détermine une consigne de la richesse d'admission en fonction des consignes de paramètres d'air admis, et
on corrige l'une au moins des consignes de paramètres d'air admis en fonction de l'estimation de la richesse d'échappement et de la consigne de la richesse d'admission.

On peut corriger l'une au moins des consignes de paramètres d'air admis en fonction de la vitesse de rotation du moteur, de la température d'admission et de la richesse d'échappement.

La correction de l'une au moins des consignes de paramètres d'air admis peut laisser inchangée ladite consigne de paramètre d'air admis lorsque le moteur à combustion interne est en fonctionnement stabilisé.

Les paramètres d'air admis peuvent comprendre la pression d'air admis et le débit d'air admis.

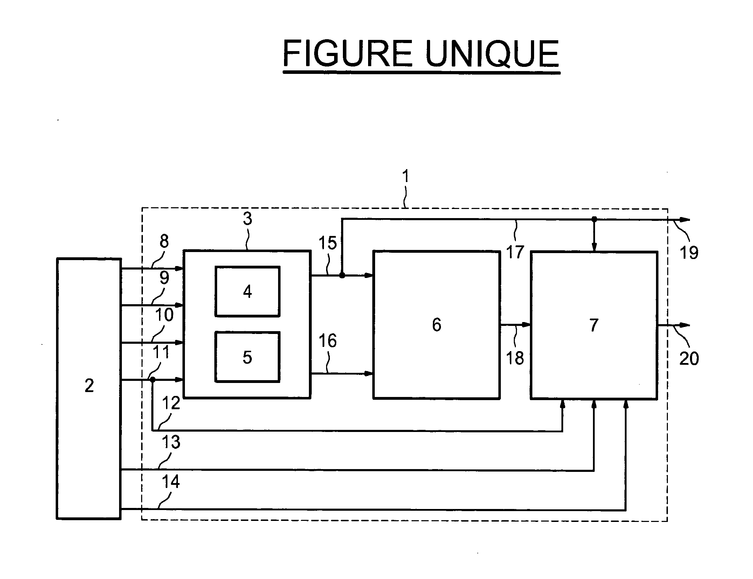

D'autres buts, caractéristiques et avantages apparaîtront à la lecture de la description suivante donnée uniquement en tant qu'exemple non limitatif et faite en référence au dessin annexé sur lequel la figure unique illustre les principaux éléments d'un système de commande selon l'invention.

Un moteur à combustion interne de type diesel est généralement pourvu d'un turbocompresseur dont le compresseur est situé entre l'admission d'air frais et le collecteur d'admission du moteur. La turbine du turbocompresseur est située entre le collecteur d'échappement du moteur et la conduite d'échappement. Afin de contrôler la composition des gaz aspirés dans les cylindres, certains moteurs à combustion interne sont munis d'un circuit de recirculation partielle des gaz d'échappement. Un circuit de recirculation partielle des gaz d'échappement permet de réinjecter dans les cylindres une partie des gaz d'échappement afin de modifier la stoechiométrie du mélange de gaz admis. Un circuit de recirculation partielle des gaz d'échappement (acronyme anglais : EGR pour « exhaust gaz recirculation » en langue anglaise) peut être situé dans la partie basse pression du moteur, c'est-à-dire en amont du compresseur, ou dans la partie haute pression, en aval du compresseur.

Un circuit EGR à basse pression est piqué entre d'une part le compresseur du turbocompresseur et l'admission d'air frais et d'autre part la turbine du turbocompresseur et l'échappement.

Un circuit EGR à haute pression est piqué entre d'une part le compresseur du turbocompresseur et le collecteur d'admission et d'autre part la turbine du turbocompresseur et le collecteur d'échappement.

Enfin, certains moteurs à combustion interne sont munis d'un circuit EGR à basse pression et d'un circuit EGR à haute pression.

Sur la figure unique, on peut voir un système de commande selon l'invention. Le système de commande 1 est connecté en entrée à des capteurs 2. Le système de commande 1 comprend un moyen d'estimation 3. Le moyen d'estimation 3 reçoit en entrée une valeur de la pression atmosphérique par la connexion 8, une valeur du débit de carburant par la connexion 9, une valeur de la température ambiante par la connexion 10 et une valeur de la vitesse de rotation du moteur à combustion interne par la connexion 11.

Le moyen d'estimation 3 émet en sortie une consigne de débit d'air admis par la connexion 16 et une consigne de pression d'admission par la connexion 15. Le moyen d'estimation 3 comprend une cartographie 5 du débit d'air admis et une cartographie 4 de la pression d'admission.

La consigne de pression d'admission permet de réguler la vitesse de rotation du compresseur séparant la partie basse pression et la partie haute pression du moteur.

Un moyen de détermination 6 reçoit en entrée la consigne de débit d'air admis par la connexion 16 et la consigne de pression d'admission par la connexion 15 et émet en sortie une consigne de composition dans le collecteur d'admission par la connexion 18. La consigne de composition dans le collecteur d'admission est également appelée de composition d'admission.

La consigne de composition d'admission $F_{1sp}$ est déterminée par application de l'équation suivante :

$$F_{1sp} = \frac{(PCO + 1) \cdot \dot{m}_{f\_sp} \cdot (\dot{m}_{in\_sp} - \dot{m}_{air\_sp})}{\dot{m}_{in\_sp} \cdot (\dot{m}_{f\_sp} + \dot{m}_{air\_sp})} \qquad (Eq. 1)$$

avec PCO = valeur de richesse stoechiométrique, 14.5 pour le gasoil

$m_{f\_sp}$ = consigne de débit de carburant
$m_{in\_sp}$ = de débit d'air inspiré par les cylindres
$m_{air\_sp}$ = consigne de débit d'air

L'équation de la composition d'admission $F_{1sp}$ présente la particularité de ne pas faire intervenir la consigne de richesse à l'échappement.

On rappelle que le débit d'air aspiré par les cylindres $m_{in\_sp}$ est calculé grâce à l'équation classique de remplissage.

$$\dot{m}_{in\_sp} = \eta_{vol} \cdot \frac{Ne}{120} Vd \frac{p_{1\_sp}}{R \cdot T_{11}} \qquad (Eq.\ 2)$$

avec $\eta_{vol}$ = le rendement volumétrique

$N_e$ = la vitesse de rotation du moteur
Vd = la cylindrée
$p_{1\_sp}$ = la consigne de pression d'admission
R = la constante des gaz parfaits
$T_{11}$ = la température en aval du RAS

Dans le cas d'un moteur à combustion interne muni d'une recirculation partielle des gaz d'échappement à basse pression, on peut admettre que la température d'admission $T_1$ est égale à la température en aval du RAS $T_{11}$.

Le moyen de correction 7 reçoit en entrée la consigne de composition d'admission par la connexion 18, la consigne de pression d'admission par une dérivation 17 de la connexion 15. la vitesse de rotation du moteur par la dérivation 12 de la connexion 11, la température d'admission par la connexion 13 et la richesse à l'échappement par la connexion 14. Le moyen de correction 7 émet en sortie une consigne corrigée de débit d'air initial par la connexion 20.

Le moyen de correction 7 permet de déterminer des consignes permettant d'accélérer la réponse de la régulation de circuit EGR en forçant les commandes des actionneurs lors d'un fonctionnement transitoire.

L'état du collecteur d'admission est décrit par le système suivant de deux équations différentielles du premier ordre.

$$\begin{cases} \dot{p}_{1\_sp} = \dfrac{R \cdot T_1}{V_1} \cdot \left( \dot{m}_{air\_sp} + \dot{m}_{egr\_sp} - \eta_{vol} \cdot \dfrac{Ne}{120} Vd \dfrac{p_{1\_sp}}{R \cdot T_{11}} \right) \\[2ex] \dot{F}_1 = \dfrac{R \cdot T_1}{p_{1\_sp} \cdot V_1} \cdot \left( \dot{m}_{egr\_sp} \cdot (F_2 - F_1) - \dot{m}_{air\_sp} \cdot F_1 \right) \end{cases} \qquad (Eq.\ 3)$$

Lorsque l'on développe et que l'on inverse ce système d'équations, on obtient une solution de la forme suivante.

$$\dot{m}_{air\_sp.corr} = \dot{m}_{T1} + \dot{m}_{T2} + \dot{m}_{T3} + \dot{m}_{T4} \qquad (Eq.\ 4)$$

avec $m_{T1} = f(T_1, F_2, F_{1\_sp}, p_{1\_sp})$

$m_{T2} = f(T_1, F_2, F_{1\_sp}, p_{1\_sp})$
$m_{T3} = f(T_1, p_{1\_sp})$
$m_{T4}\ f(T_1, F_2, F_{1\_sp}, p_{1\_sp}, Ne)$

et avec $F_2$ = la mesure de richesse à l'échappement.

Les trois premiers termes contiennent les dérivées de la de pression ou de la consigne de composition dans le collecteur d'admission. En régime stabilisé, ces termes sont nuls. La valeur stationnaire de la consigne corrigée est alors donnée par le quatrième terme.

La température dans le collecteur d'admission, la vitesse de rotation du moteur et la richesse sont les principales mesures intervenant dans la détermination de la consigne corrigée. La mesure de richesse peut être remplacée par une estimation.

Le système de commande 1 émet en sortie la consigne de pression d'admission et une corrigée de débit d'air admis.

Le système de commande permet ainsi de corriger les consignes de commande d'un moteur à combustion interne de façon à outrepasser les consignes de commandes en fonctionnement stabilisé et à améliorer le fonctionnement lors du fonctionnement transitoire. Les émissions d'espèces polluantes et de fumées sont donc réduites en fonctionnement stabilisé et en fonctionnement transitoire.

**Revendications**

1. Système de commande d'un moteur à combustion interne du type diesel équipé d'un circuit de recirculation partielle des gaz d'échappement, comprenant un moyen d'estimation (3) de consignes de paramètres d'air admis, **caractérise par le fait qu'**il comprend
un moyen d'estimation (14) de la richesse d'échappement,
un moyen de détermination (6) d'une consignes de la richesse d'admission en fonction de consignes de paramètres d'air admis, et
un moyen de correction (7) de l'une au moins des consignes de paramètres d'air admis en function de l'estimation de la richesse d'échappement et de la consigne de la richesse d'admission.

2. Système de commande selon la revendication 1. dans lequel le moyen de détermination d'une consigne de la richesse d'admission comprend une cartographie du rendement volumique et des moyens de mémorisation contenant la valeur de la richesse à la stoechiométrie, la constante des gaz et la cylindrée du moteur à combustion interne.

3. Système de commande selon l'une quelconque des revendications précédentes, comprenant un moyen de mesure de la température du collecteur d'admission, un moyen de mesure de la vitesse de rotation du moteur, et le moyen d'estimation de la richesse à l'échappement, dans lequel le moyen de correction (7) de l'une au moins des consignes de paramètres d'air admis est apte à déterminer une consigne corrigée de l'une au moins des consignes de paramètres d'air admis en fonction dé l'estimation de richesse d'échappement, de la de la richesse d'admission, de la température du collecteur d'admission, de la vitesse de rotation du moteur, et de la richesse à l'échappement.

4. Système de commande selon l'une quelconque des revendications précédentes, dans lequel le moyen d'estimation de la richesse à l'échappement est un capteur de mesure.

5. Système de commande selon l'une quelconque des revendications précédentes, dans lequel la consigne corrigée de débit d'air admis correspond à la consigne de débit d'air admis si le moteur à combustion interne présente un fonctionnement stabilisé.

6. Système de commande selon l'une quelconque des revendications précédentes, dans lequel le circuit de recirculation partielle des gaz d'échappement est piqué :

    - entre le moteur et un turbocompresseur, ou
    - entre d'une part un turbocompresseur et l'admission d'air frais et d'autre part le turbocompresseur et l'échappement, ou
    - une combinaison de ces deux circuits.

7. Système de commande selon l'une quelconque des revendications précédentes, dans lequel le moyen d'estimation des consignes de paramètres d'air admis est une cartographie.

8. Système de commande Selon l'une quelconque des revendications précédentes, dans lequel les paramètres d'air admis comprennent la pression d'air admis et le débit d'air admis.

9. Procédé de commande d'un moteur à combustion interne équipant un véhicule automobile, muni d'un circuit de recirculation partielle des gaz d'échappement, le procédé de commande comprenant une estimation de consignes de paramètres d'air admis, **caractérisé par le fait qu'**il comprend les étapes suivantes :

    on estime la richesse d'échappement,
    on détermine une consigne de la richesse d'admission en fonction des consignes de paramètres d'air admis, et
    on corrige l'une au moins des consignes de paramètres d'air admis en fonction de l'estimation de la richesse d'échappement et de la de la richesse d'admission.

10. Procédé selon la revendications 9, dans lequel on corrige l'une au moins des consignes de paramètres d'air admis en fonction de la vitesse de rotation du moteur, de la température d'admission et de la richesse d'échappement.

11. Procédé selon l'une quelconque des revendications 9 ou 10, dans lequel la correction de l'une au moins des consignes de paramètres d'air admis laisse inchangée ladite de paramètre d'air admis lorsque le moteur à combustion interne est en fonctionnement stabilisé.

12. Procédè selon l'une quelconque des revendications 9 à 11, dans lequel les paramètres d'air admis comprennent la pression d'air admis et le dépit d'air admis.

**Patentansprüche**

1. System zum Steuern einer DieselBrennkraftmaschine, die mit einem Kreis für partielle Abgasrückführung ausgerüstet ist, das ein Mittel (3) zum Schätzen von Einlassluftparameter-Sollwerten umfasst, **dadurch gekennzeichnet, dass** es Folgendes umfasst:

ein Mittel (14) zum Schätzen der Auslassfettigkeit,
ein Mittel (6) zum Bestimmen eines Einlassfettigkeits-Sollwerts als Funktion der Einlassluftparameter-Sollwerte und
ein Mittel (7) zum Korrigieren wenigstens eines der Einlassluftparameter-Sollwerte als Funktion der Schätzung der Auslassfettigkeit und des Einlassfettigkeits-Sollwerts.

2. Steuersystem nach Anspruch 1, wobei das Mittel zum Bestimmen eines Einlassfettigkeits-Sollwerts ein Kennfeld für die Volumenleistung und Speichermittel, die den Wert der Fettigkeit in Bezug auf die Stöchiometrie, die Konstante der Gase und den Hubraum der Brennkraftmaschine enthalten, umfasst.

3. Steuersystem nach einem der vorhergehenden Ansprüche, das Mittel zum Messen der Temperatur des Einlasssammlers, ein Mittel zum Messen der Drehzahl der Maschine und das Mittel zum Schätzen der Auslassfettigkeit umfasst, wobei das Mittel (7) zum Korrigieren wenigstens eines der Einlassluftparameter-Sollwerte einen korrigierten Sollwert wenigstens eines der Einlassluftparameter-Sollwerte als Funktion der Schätzung der Auslassfettigkeit, des Einlassfettigkeits-Sollwerts, der Temperatur des Einlasssammlers, der Drehzahl des Maschine und der Auslassfettigkeit bestimmen kann.

4. Steuersystem nach einem der vorhergehenden Ansprüche, wobei das Mittel zum Schätzen der Auslassfettigkeit ein Messsensor ist.

5. Steuersystem nach einem er vorhergehenden Ansprüche, wobei der korrigierte Einlassluftdurchfluss-Sollwert dem Einlassluftdurchfluss-Sollwert entspricht, wenn sich die Brennkraftmaschine in einem stabilisierten Betrieb befindet.

6. Steuersystem nach einem der vorhergehenden Ansprüche, wobei der Kreis für partielle Abgasrückführung eingefügt ist:

- zwischen die Maschine und einen Turbolader oder
- zwischen einerseits einen Turbolader und den Frischlufteinlass und andererseits den Turbolader und den Auslass oder
- eine Kombination dieser beiden Kreise.

7. Steuersystem nach einem der vorhergehenden Ansprüche, wobei das Mittel zum Schätzen der Einlassluftparameter-Sollwerte ein Kennfeld ist.

8. Steuersystem nach einem der vorhergehenden Ansprüche, wobei die Einlassluftparameter den Einlassluftdruck und den Einlassluftdurchfluss umfassen.

9. Steuerverfahren für eine Brennkraftmaschine, mit der ein Kraftfahrzeug ausgerüstet ist und die mit einem Kreis für partielle Abgasrückführung versehen ist, wobei das Steuerverfahren eine Schätzung von Einlassluftparameter-Sollwerten umfasst, **dadurch gekennzeichnet, dass** es die folgenden Schritte umfasst:

Schätzen der Auslassfettigkeit,

Bestimmen eines Einlassfettigkeits-Sollwerts als Funktion von Einlassluftparameter-Sollwerten und Korrigieren wenigstens eines der Einlassluftparameter-Sollwerte als Funktion der Schätzung der Auslassfettigkeit und des Einlassfettigkeits-Sollwerts.

10. Verfahren nach Anspruch 9, wobei wenigstens einer der Einlassluftparameter-Sollwerte als Funktion der Drehzahl der Maschine, der Einlasstemperatur und der Auslassfettigkeit korrigiert wird.

11. Verfahren nach einem der Ansprüche 9 oder 10, wobei die Korrektur wenigstens eines der Einlassluftparameter-Sollwerte den Einlassluftparameter-Sollwert unverändert lässt, wenn sich die Brennkraftmaschine in einem stabilisierten Betrieb befindet.

12. Verfahren nach einem der Ansprüche 9 bis 11, wobei die Einlassluftparameter den Einlassluftdruck und den Einlassluftdurchfluss umfassen.

**Claims**

1. Control system for a diesel type internal combustion engine equipped with a circuit for partial recirculation of the exhaust gases, including means (3) for estimating intake air parameter set point values, **characterized in that** it includes:

   - means (14) for estimating the exhaust richness,
   - means (6) for determining an intake richness set point value as a function of intake air parameter set point values, and
   - means (7) for correcting at least one of the intake air parameter set point values as a function of the estimate of the exhaust richness and the intake richness set point value.

2. Control system according to Claim 1, wherein the means for determining an intake richness set point value include a map of the volumetric efficiency and storage means containing the stoichiometric richness value, the gas constant and the cubic capacity of the internal combustion engine.

3. Control system according to either one of the preceding claims, including means for measuring the temperature in the intake manifold, means for measuring the rotation speed of the engine, and the means for estimating the exhaust richness, wherein the means (7) for correcting at least one of the intake air parameter set point values are adapted to determine a corrected set point value for at least one of the intake air parameter set point values as a function of the estimate of the exhaust richness, the intake richness set point value, the temperature in the intake manifold, the rotation speed of the engine and the exhaust richness.

4. Control system according to any one of the preceding claims, wherein the means for estimating the exhaust richness is a measurement sensor.

5. Control system according to any one of the preceding claims, wherein the corrected intake air flow rate set point value corresponds to the intake air flow rate set point value during stabilized operation of the internal combustion engine.

6. Control system according to any one of the preceding claims, wherein the circuit for partial recirculation of the exhaust gases is tapped off:

   - between the engine and a turbocompressor, or
   - between on the one hand a turbocompressor and the cold air intake and on the other hand the turbocompressor and the exhaust, or
   - a combination of those two circuits.

7. Control system according to any one of the preceding claims, wherein the means for estimating the intake air parameter set point values is a map.

8. Control system according to any one of the preceding claims, wherein the intake air parameters include the intake air pressure and the intake air flow rate.

9. Method of controlling an internal combustion engine equipping a motor vehicle, provided with a circuit for partial recirculation of the exhaust gases, the control method including estimation of intake air parameter set point values, **characterized in that** it includes the following steps:

- the exhaust richness is estimated,
- an intake richness set point value is determined as a function of the intake air parameter set point values, and
- at least one of the intake air parameter set point values is corrected as a function of the estimate of the exhaust richness and the intake richness set point value.

10. Method according to Claim 9, wherein at least one of the intake air parameter set point values is corrected as a function of the rotation speed of the engine, the intake temperature and the exhaust richness.

11. Method according to either one of Claims 9 and 10, wherein the correction of at least one of the intake air parameter set point values leaves unchanged said intake air parameter set point value during stabilized operation of the internal combustion engine.

12. Method according to any one of Claims 9 to 11, wherein the intake air parameters include the intake air pressure and the intake air flow rate.

FIGURE UNIQUE